# EUROPÄISCHE PATENTANMELDUNG

(11) **EP 2 957 605 A1**
(43) Veröffentlichungstag der Anmeldung: **23.12.2015**
(21) Anmeldenummer: 14172913.7
(22) Anmeldetag: 18.06.2014
(51) Int. Cl.: C09D 5/18

(54) **Brandschutz-Zusammensetzung und deren Verwendung**

(71) Anmelder: HILTI Aktiengesellschaft, 9494 Schaan (LI)
(72) Erfinder: Marauska, Juliane, 72766 Reutlingen (DE); Lang, Martin, 82152 Planegg (DE); Simon, Sebastian, 86807 Buchloe Lindenberg (DE)
(74) Vertreter: Hilti Aktiengesellschaft Corporate Intellectual Property

(57) **Zusammenfassung**

Es wird eine Brandschutzzusammensetzung beschrieben mit einen Bestandteil A, der einen multifunktionellen Michael-Akzeptor enthält, der mindestens zwei elektronenarme Kohlenstoffmehrfachbindungen pro Molekül als funktionelle Michael-Akzeptor-Gruppe aufweist, mit einem Bestandteil B, der einen multifunktionellen Michael-Donor enthält, der mindestens zwei Thiol-Gruppen pro Molekül als funktionelle Michael-Donor-Gruppe aufweist, und mit einem Bestandteil C, der mindestens ein ablativ wirkendes Brandschutzadditiv enthält.

Durch die erfindungsgemäße Zusammensetzung können in einfacher und schneller Weise Beschichtungen mit der für die jeweilige Feuerwiderstandsdauer erforderlichen Schichtdicke aufgetragen werden, wobei die Schichtdicke auf ein Minimum reduziert und dennoch eine gute Brandschutzwirkung erreicht werden kann. Die erfindungsgemäße Zusammensetzung eignet sich besonders für den Brandschutz, insbesondere als Beschichtung von Kabeln und Kabeltrassen zur Erhöhung der Feuerwiderstandsdauer.

## Beschreibung

Die vorliegende Erfindung betrifft eine Zusammensetzung, insbesondere eine ablativ wirkende Zusammensetzung, die ein Bindemittel auf Thiol-En-Basis enthält, sowie deren Verwendung für den Brandschutz, insbesondere für die Beschichtung von Bauteilen, wie Stützen, Trägern, Fachwerkstäben, Dämmsystemen, z.B. Weichschotts, Kabel, Kabelbündeln oder Kabeltrassen zur Erhöhung der Feuerwiderstandsdauer.

Bei Bränden bilden Kabeltrassen aus mehreren Gründen besondere Gefahrenstellen. Zum einen tritt bei Bränden von mit Kunststoff isolierten Kabeln eine intensive Rauchentwicklung unter Emission schädlicher, z.T. giftiger Stoffe auf. Zum anderen kann sich entlang von Kabeltrassen ein Brand schnell ausbreiten und der Brand unter Umständen an eine vom ursprünglichen Brandherd weit entfernte Stelle gleitet werden. Bei Kabelanlagen besteht ferner das Problem, dass bei diesen Kabeln durch thermische Einwirkung oder Abbrand die Wirkung der Isolation nachlässt und durch Kurzschluss eine Unterbrechung des Stromflusses auftreten kann und damit die Kabel zerstört, bzw. funktionsuntüchtig werden.

Elektrische Kabel und Leitungen werden häufig in Fluren verlegt und von dort in die angrenzenden Räume unterteilt. Diese Flure dienen im Brandfall als Flucht- und Rettungswege, die bei Bränden von Kabelinstallationen durch Rauchentwicklung und toxische Brandgase unbenutzbar werden, wobei z. B. brennendes PVC stark korrosive Gase freisetzt. Kabelmassierungen stellen somit insbesondere im Industriebau, in Kraftwerksanlagen, in Krankenhäusern, Groß- und Verwaltungsbauten und generell in Gebäuden mit hoher Installationsdichte ein erhebliches Gefahrenpotential dar. Die Kabelisolierungen sind in diesen Gebäuden oft die maßgebliche Brandlast und verursachen lang andauernde Brände mit Brandraumtemperaturen in ungünstigsten Fällen bis über 1000°C. Aus den genannten Gründen ist Kabeltrassen in Bezug auf Brandschutzmaßnahmen besondere Beachtung zu schenken.

Um diese Gefährdungen der fehlenden Funktionsfähigkeit der Kabel und der starken Brandlasterhöhung durch die Kabel zumindest zeitlich begrenzt zu verhindern, ist es bekannt, die Kabel durch unbrennbare Baustoffe der Baustoffklasse A1 oder A2 räumlich zu trennen, in dem die Kabel z.B. in Installations- und/oder Funktionserhaltkanälen verlegt werden. Dieses erfordert jedoch einen hohen Arbeitsaufwand. Zusätzlich entsteht ein hoher Raumbedarf durch aufwändige Konstruktionen, die zusätzlich zum Gewicht der Kabeltrasse noch das Gewicht der Installations- und/oder Funktionserhaltkanäle berücksichtigen müssen. Dazu werden häufig Kabel und Kabeltrassen mit isolierenden Materialien umwickelt, wie Aluminiumoxid-Silika-Matten oder Mineralwollmatten. Um einen ausreichenden Brandschutz zu erreichen, muss das Material sehr dick sein. Dies führt jedoch zu Problemen hinsichtlich der Abstände zwischen dem geschützten Gegenstand und benachbarten oder überlagerten Gegenständen. Darüber hinaus verursachen diese Materialien aufgrund ihrer thermischen Isoliereigenschaften Probleme bei Normalbetrieb. Eines dieser Probleme wird als "Herabsetzung der Strombelastbarkeit" bezeichnet. Dies bedeutet, dass die durch elektrische Kabel in dem Kabelrohr oder der Kabeltrasse erzeugte Wärme im Bereich der Isolierung nicht mehr abgeführt werden kann, was dazu führt, dass der in diesen Kabeln zulässige sichere Strombetriebspegel verringert wird oder dass eine Überhitzung der Kabel erfolgt. Diese Nachteile machen diese Art des Brandschutzes sehr unflexibel hinsichtlich deren Einsatzbereichs.

Zur Vermeidung dieser Nachteile ist es auch bekannt, für den Schutz elektrischer Kabel Beschichtungen aufzubringen, die im Brandfall unter thermischer Einwirkung intumeszieren, d.h. aufschäumen und so eine Dämmschicht bilden oder die durch physikalische und chemische Prozesse Wärme aufnehmen und so kühlend wirken.

Mit dämmschichtbildenden Beschichtungen ist es möglich, die Teilnahme von Kabeln am Brandgeschehen für 30 Minuten oder länger zu verhindern. Derartige beschichtete Kabel werden oft auf Kabeltrassen verlegt. Hierbei hat es sich jedoch gezeigt, dass bei vertikaler oder geneigter Anordnung der Kabeltrassen auch ein vollständig aufgeschäumter Dämmschichtbildner die Brandausbreitung ohne zusätzliche Maßnahmen nicht verhindern kann. Während der Erwärmung verformen sich die Kabel zwischen den Kabelschellen so stark, dass die Dämmschicht bildende Beschichtung aufreißt und teilweise abplatzt. Entstehender Schaum löst sich dabei ebenfalls von den Kabeln und fällt ab. Bei nach Verlegung der Kabel erfolgter Beschichtung sind die Kabel im Bereich der Schellenkonstruktionen nicht in vollem Umfang zugänglich. Dies hat zur Folge, dass bei vertikaler oder geneigter Anordnung der Kabeltrassen im Brandfall im Bereich der Schellenkonstruktionen nur ein Schaum geringer Dicke entsteht, der als Brandschutz für 30 Minuten nicht mehr ausreicht. Bei Verlegung von PVC-Kabeln treten daher wieder die im Brandfall bekannten Probleme auf.

Es ist auch bekannt, flammwidrig bzw. schwer entflammbar ausgerüstete halogenfreie Kabel zu verwenden, die nur schwer entflammbar und raucharm sind und nur eine geringe Brandweiterleitung besitzen. Diese Kabel sind jedoch sehr teuer und kommen daher nur unter extrem gefährdeten Bedingungen zum Einsatz.

Zur Vermeidung der Nachteile dämmschichtbildender Beschichtungen wurden bei Kabeltrassen Materialen auf die Kabel und Kabelhalterungen aufgebracht, die einen Ablationseffekt zeigen, d.h. unter Hitzeeinwirkung kühlend wirken und keramisieren, wie beispielsweise in der DE 196 49 749 A1 beschrieben. Hierin wird ein Verfahren zur Ausbildung eines Brandschutzes für brennbare oder hitzegefährdete Bauteile beschrieben, wobei die Bauteile mit einer Beschichtung versehen werden, die als Bindemittel ein anorganisches Material aus feingemahlenen hydraulischen Bindemitteln wie Calcium-Silicat, -Aluminat oder -Ferrit enthält, dem Ablativstoffe wie Aluminium- oder Magnesium-Hydroxid zugesetzt ist. Nachteil an dieser Maßnahme ist, dass einerseits das Aufbringen des den Ablationseffekt zeigenden Materials zeitintensiv ist und andererseits die Haftung des Materials an den Kabeln und den Kabelhalterungen ein Problem darstellt.

Andere derzeit auf dem Markt befindlichen Beschichtungssysteme, welche einige der oben erwähnten Nachteile nicht aufweisen sind einkomponentige Beschichtungszusammensetzungen auf der Basis von Polymerdispersionen, die sich endotherm zersetzende Verbindungen enthalten. Nachteilig an diesen Beschichtungen ist zum einen die relativ lange Trocknungsdauer der Beschichtung und damit einhergehende geringe Trockenschichtdicke, da diese Systeme physikalisch, d.h. durch Verdunstung des Lösungsmittels trocknen. Daher sind für dickere Beschichtungen mehrere nacheinander folgende Auftragungen erforderlich, was diese Systeme ebenfalls zeit- und arbeitsintensiv und daher unwirtschaftlich macht.

Der Erfindung liegt daher die Aufgabe zugrunde, ein ablativ wirkendes Beschichtungssystem der eingangs erwähnten Art zu schaffen, das die genannten Nachteile vermeidet, das insbesondere nicht lösemittel- oder wasserbasiert ist und eine schnelle Aushärtung aufweist, aufgrund entsprechend abgestimmter Viskosität einfach aufzutragen ist und aufgrund des erreichbaren hohen Füllgrades nur eine geringe Schichtdicke erfordert.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine Brandschutz-Zusammensetzung mit einem Bestandteil A, der einen multifunktionellen Michael-Akzeptor enthält, der mindestens zwei elektronenarme Kohlenstoffmehrfachbindungen pro Molekül aufweist, mit einem Bestandteil B, der einen multifunktionellen Michael-Donor enthält, der mindestens zwei Thiol-Gruppen pro Molekül aufweist (Thiol-funktionalisierte Verbindung), und mit einem Bestandteil C, der mindestens ein ablativ wirkendes Brandschutzadditiv enthält.

Durch die erfindungsgemäße Zusammensetzung können in einfacher und schneller Weise Beschichtungen mit der für die jeweilige Feuerwiderstandsdauer erforderlichen Schichtdicke aufgetragen werden. Die durch die Erfindung erreichten Vorteile sind im Wesentlichen darin zu sehen, dass im Vergleich zu den Systemen auf Lösemittel- oder Wasserbasis mit ihren inhärenten langsamen Aushärtezeiten die Arbeitszeit erheblich reduziert werden kann.

Ein weiterer Vorteil liegt darin, dass die erfindungsgemäße Zusammensetzung einen hohen Füllgrad mit den Brandschutzadditiven aufweisen kann, so dass selbst mit dünnen Schichten eine große isolierende Wirkung erreicht wird. Der mögliche hohe Füllgrad der Zusammensetzung kann selbst ohne die Verwendung von leicht flüchtigen Lösungsmitteln erreicht werden. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet, sondern chemisch über eine Additionsreaktion härtet. Damit erleiden die Zusammensetzungen keinen Volumenverlust durch das Abtrocknen von Lösemitteln oder bei wasserbasierten Systemen von Wasser. So ist bei einem klassischen System ein Lösemittelgehalt von etwa 25% typisch. Dies bedeutet, dass aus einer 10 mm-Nassfilmschicht nur 7,5 mm als eigentliche Schutzschicht auf dem zu schützenden Substrat verbleiben. Bei der erfindungsgemäßen Zusammensetzung verbleiben mehr als 95% der Beschichtung auf dem zu schützenden Substrat.

Im Brandfall erweicht das Bindemittel und die darin erhaltenen Brandschutzadditive zersetzen sich abhängig von den verwendeten Additiven in einer endothermen physikalischen oder chemischen Reaktion unter Bildung von Wasser und inerten Gasen, was zum einen zur Kühlung der Kabel und zum anderen zur Verdünnung der brennbaren Gase oder durch Ausbilden einer Schutzschicht, die das Substrat vor Wärme- und Sauerstoffangriff schützt, führt und zum anderen die Ausbreitung des Feuers durch den Abbrand der Beschichtung verhindert.

Die erfindungsgemäßen Zusammensetzungen zeigen eine ausgezeichnete Haftung an unterschiedlichen Untergründen verglichen mit lösemittel- oder wasserbasierten Systemen, wenn diese ohne Grundierung aufgetragen werden, so dass sie universell eingesetzt werden können und nicht nur an den zu schützenden Leitungen sondern auch anderen Trägermaterialien haften.

Zum besseren Verständnis der Erfindung werden die folgenden Erläuterungen der hierin verwendeten Terminologie als sinnvoll erachtet. Im Sinne der Erfindung:
- ist eine "*Michael-Addition*" allgemein eine Reaktion zwischen einem Michael-Donor und einem Michael-Akzeptor, häufig in Gegenwart eines Katalysators, wie beispielsweise einer starken Base, wobei ein Katalysator nicht zwingend erforderlich ist; die Michael-Addition ist in der Literatur hinreichend bekannt und häufig beschrieben;
- ist ein "*Michael-Akzeptor*" eine Verbindung mit mindestens einer funktionellen Michael-Akzeptor-Gruppe, die eine Michael-aktive Kohlenstoffmehrfachbindung enthält, wie eine C-C-Doppelbindung oder C-C-Dreifachbindung, die nicht aromatisch ist, die elektronenarm ist; eine Verbindung mit zwei oder mehreren Michael-aktiven Kohlenstoffmehrfachbindungen wird als multifunktioneller Michael-Akzeptor bezeichnet; ein Michael-Akzeptor kann eine, zwei, drei oder mehr separate funktionelle Michael-Akzeptor-Gruppen aufweisen; jede funktionelle Michael-Akzeptor-Gruppe kann eine Michael-aktive Kohlenstoffmehrfachbindung aufweisen; die Gesamtzahl an Michael-aktiven Kohlenstoffmehrfachbindungen an dem Molekül ist die Funktionalität des Michael-Akzeptors; wie hierein verwendet, ist das "*Gerüst*" des Michael-Akzeptors der andere Teil des Akzeptor-Moleküls, an das die funktionelle Michael-Akzeptor-Gruppe angebunden sein kann;
- bedeutet "*elektronenarm*", dass die Kohlenstoffmehrfachbindung in unmittelbarer Nähe, d.h. in der Regel an dem der Mehrfachbindung benachbarten Kohlenstoffatom, elektronenziehende Gruppen trägt, die Elektronendichte von der Mehrfachbindung abziehen, wie C=O und/oder C=N;
- ist ein "*Michael-Donor*" eine Verbindung mit mindestens einer funktionellen Michael-Donor-Gruppe, die eine funktionelle Gruppe ist, die mindestens ein Michael-aktives Wasserstoffatom enthält, welches ein Wasserstoffatom ist, das an ein Heteroatom angelagert ist, wie Thiole; eine Verbindung mit zwei oder mehreren Michael-aktiven Wasserstoffatomen wird als multifunktioneller Michael-Donor bezeichnet; ein Michael-Donor kann eine, zwei, drei oder mehr separate funktionelle Michael-Donor-Gruppen aufweisen; jede funktionelle Michael-Donor-Gruppe kann ein Michael-aktives Wasserstoffatom aufweisen; die Gesamtzahl an Michael-aktiven Wasserstoffatomen an dem Molekül ist die Funktionalität des Michael-Donors; wie hierein verwendet, ist das "Gerüst" des Michael-Donors der andere Teil des Donormoleküls, an das die funktionelle Michael-Donor-Gruppe angebunden ist; von dieser Definition sind auch Anionen der Michael-Donoren umfasst;
- bedeutet "*ablativ wirkend*", dass bei Einwirken erhöhter Temperaturen, d.h. oberhalb von 200°C, wie sie etwa im Brandfall auftreten können, eine Reihe von chemischen und physikalischen Reaktionen erfolgen, die Energie in Form von Wärme benötigen, wobei diese Energie der Umgebung entzogen wird; dieser Begriff wird gleichbedeutend mit dem Begriff "*endotherm zersetzend*" verwendet;
- bedeutet "*(Meth)acryl...*/*...(meth)acryl...*" dass sowohl die "Methacryl.../...methacryl... - als auch die "Acryl.../...acryl..."-Verbindungen umfasst sein sollen;
- ist ein "*Oligomer*" ein Molekül mit 2 bis 5 Wiederholungseinheiten und ist ein "*Polymer*" ein Molekül mit 6 oder mehr Wiederholungseinheiten und können Strukturen aufweisen, die linear, verzweigt, sternförmig, gewunden, hyperverzweigt oder vernetzt sind; Polymere können eine einzelne Art von Wiederholungseinheit aufweisen ("Homopolymere") oder sie können mehr als eine Art von Wiederholungseinheiten aufweisen ("Copolymere"). Wie hierin verwendet, ist "Harz" ein Synonym für Polymer.

Im Allgemeinen wird angenommen, dass das Umsetzen eines Michael-Donors mit einer Funktionalität von zwei mit einem Michael-Akzeptor mit einer Funktionalität von zwei zu linearen molekularen Strukturen führen wird. Oftmals müssen molekulare Strukturen erzeugt werden, die verzweigt und/oder vernetzt sind, wofür die Verwendung von mindestens einem Inhaltsstoff mit einer Funktionalität von größer zwei erforderlich ist. Daher haben der multifunktionelle Michael-Donor oder der multifunktionelle Michael-Akzeptor oder beide bevorzugt eine Funktionalität von größer zwei.

Erfindungsgemäß kann als multifunktioneller Michael-Akzeptor jede Verbindung verwendet werden, welche über mindestens zwei funktionelle Gruppen verfügt, welche Michael-Akzeptoren darstellen. Jede funktionelle Gruppe (Michael-Akzeptor) ist dabei entweder direkt oder über einen Linker an ein Gerüst angebunden.

Erfindungsgemäß kann als Michael-Donor jede Verbindung verwendet werden, die über mindestens zwei Thiol-Gruppen als funktionelle Michael-Donor-Gruppen verfügt, welche in einer Michael-Additionsreaktion an elektronen arme Doppelbindungen addieren können (Thiol-funktionalisierte Verbindung). Jede Thiolgruppe ist dabei entweder direkt oder über einen Linker an ein Gerüst angebunden.

Der multifunktionelle Michael-Akzeptor oder der multifunktionelle Michael-Donor der vorliegenden Erfindung können über irgendeines einer breiten Vielzahl von Gerüsten verfügen, wobei diese gleich oder unterschiedlich sein können.

Erfindungsgemäß ist das Gerüst ein Monomer, ein Oligomer oder ein Polymer.

In einigen Ausführungsformen der vorliegenden Erfindung umfassen die Gerüste Monomere, Oligomere oder Polymere mit einem Molekulargewicht (MW) von 50.000 g/mol oder weniger, bevorzugt 25.000 g/mol oder weniger, stärker bevorzugt 10.000 g/mol oder weniger, noch stärker bevorzugt 5.000 g/mol oder weniger, noch stärker bevorzugt 2.000 g/mol oder weniger, und am stärksten bevorzugt 1.000 g/mol oder weniger.

Als Monomere, die die als Gerüste geeignet sind, können beispielhaft Alkandiole, Alkylenglykole, Zucker, mehrwertige Derivate davon oder Gemische davon und Amine, wie Ethylendiamin und Hexamethylendiamin, und Thiole erwähnt werden. Als Oligomere oder Polymere, die als Gerüste geeignet sind, können folgende beispielhaft erwähnt werden: Polyalkylenoxid, Polyurethan, Polyethylenvinylacetat, Polyvinylalkohol, Polydien, hydriertes Polydien, Alkyd, Alkydpolyester, (Meth)acrylpolymer, Polyolefin, Polyester, halogeniertes Polyolefin, halogenierter Polyester, Polymercaptan, sowie Copolymere oder Gemische davon.

In bevorzugten Ausführungsformen der Erfindung ist das Gerüst ein mehrwertiger Alkohol oder ein mehrwertiges Amin, wobei diese monomer, oligomer oder polymer sein können. Stärker bevorzugt ist das Gerüst ein mehrwertiger Alkohol.

Als mehrwertige Alkohole, die als Gerüste geeignet sind, können dabei folgende beispielhaft erwähnt werden: Alkandiole, wie Butandiol, Pentandiol, Hexandiol, Alkylenglykole, wie Ethylenglykol, Propylenglykol und Polypropylenglykol, Glycerin, 2-(Hydroxymethyl)propan-1,3-diol,1,1,1-Tris(hydroxymethyl)ethan, 1,1,1-Trimethylolpropan, Di(trimethylolpropan), Tricyclodecandimethylol, 2,2,4-Trimethyl-1,3-pentandiol, Bisphenol A, Cyclohexandimethanol, alkoxylierte und/oder ethoxylierte und/oder propoxylierte Derivate von Neopentylglykol, Tertraethylenglykolcyclohexandimethanol, Hexandiol, 2-(Hydroxymethyl)propan-1,3-diol, 1,1,1-Tris(hydroxymethyl)ethan, 1,1,1-Trimethylolpropan und Rizinusöl, Pentaerythritol, Zucker, mehrwertige Derivate davon oder Gemische davon.

Als Linker können beliebige Einheiten, welche geeignet sind, Gerüst und funktionelle Gruppe zu verbinden, verwendet werden. Für Thiol-funktionalisierte Verbindungen ist der

Linker bevorzugt ausgewählt unter den Strukturen (I) bis (XI). Für Michael-Akzeptoren ist der Linker bevorzugt ausgewählt unter den Strukturen (XII) bis (XIX).

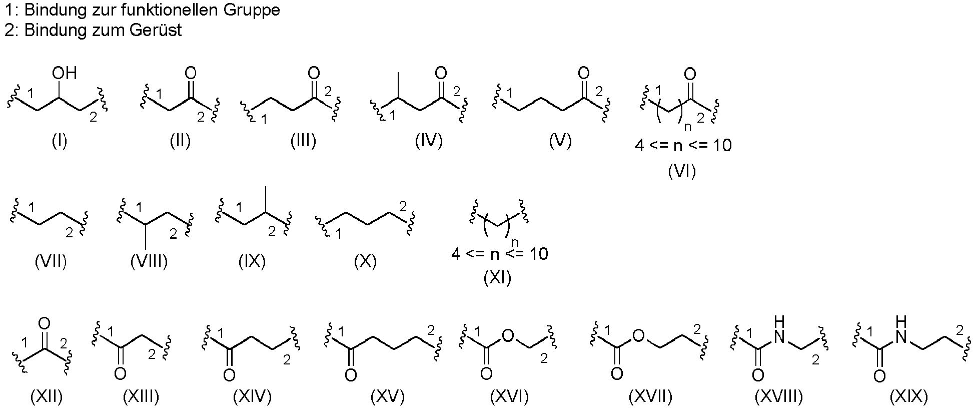

Als Linker für Thiol-funktionalisierte Verbindungen besonders bevorzugt sind die Strukturen (I), (II), (III) und (IV). Als Linker für Michael-Akzeptoren besonders bevorzugt ist Struktur (XII).

Für Thiol-funktionalisierte Verbindungen ist die funktionelle Gruppe die Thiol-Gruppe (-SH).

Besonders bevorzugte Thiol-funktionalisierte Verbindungen sind Ester der α-Thioessigsäure (2-Mercaptoacetate), β-Thiopropionsäure (3-Mercaptopropionate) und 3-Thiobuttersäure (3-Mercaptobutyrate) mit Monoalkoholen, Diolen, Triolen, Tetraolen, Pentaolen oder anderen Polyolen sowie 2-Hydroxy-3-mercaptopropylderivate von Monoalkoholen, Diolen, Triolen, Tetraolen, Pentaolen oder anderen Polyolen. Auch Gemische von Alkoholen können hierbei als Basis für die Thiol-funktionalisierte Verbindung verwendet werden. In dieser Hinsicht wird Bezug genommen auf die WO 99/51663 A1, deren Inhalt hiermit in diese Anmeldung aufgenommen wird.

Als besonders geeignete Thiol-funktionalisierte Verbindungen können beispielhaft erwähnt werden: Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1 -Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1 -Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), Capcure 3-800 (BASF), GPM-800 (Gabriel Performance Products), Capcure LOF (BASF), GPM-800L0 (Gabriel Performance Products), KarenzMT PE-1 (Showa Denko), 2-Ethylhexylthioglykolat, *iso*-Octylthioglykolat, Di(*n*-butyl)thiodiglykolat, Glykol-di-3-mercaptopropionat, 1,6-Hexandithiol, Ethylenglykol-bis(2-mercaptoacetat) und Tetra(ethylenglykol)dithiol.

Die Thiol-funktionalisierte Verbindung kann alleine oder als Gemisch von zwei oder mehreren, unterschiedlichen Thiol-funktionalisierten Verbindungen eingesetzt werden.

Für Michael-Akzeptoren ist als funktionelle Gruppe jede Gruppe geeignet, welche in Kombination mit dem einem Linker einen Michael-Akzeptor bildet. Zweckmäßig wird als Michael-Akzeptor eine Verbindung mit mindestens zwei elektronenarmen Kohlenstoffmehrfachbindungen, wie C-C-Doppelbindungen oder C-C-Dreifachbindungen, bevorzugt C-C-Doppelbindungen, pro Molekül als funktionelle Michael-Akzeptor-Gruppe verwendet.

Gemäß einer bevorzugten Ausführungsform der Erfindung ist die funktionelle Gruppe des Michael-Akzeptors eine Verbindung mit der Struktur (XX): 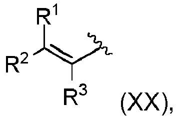 in der R₁, R₂ und R₃ jeweils unabhängig voneinander Wasserstoff oder organische Reste sind, wie zum Beispiel eine lineare, verzweigte oder cyclische, gegebenenfalls substituierte Alkylgruppe, Arylgruppe, Aralkylgruppe (auch aryl-substituierte Alkylgruppe genannt) oder Alkarylgruppe (auch alkyl-substituierte Arylgruppe genannt) darstellt, einschließlich Derivate und substituierte Versionen davon, wobei diese unabhängig voneinander zusätzliche Ethergruppen, Carboxylgruppen, Carbonylgruppen, Thiol-analoge Gruppen, Stickstoff-enthaltende Gruppen oder Kombinationen davon enthalten können.

Einige geeignete multifunktionelle Michael-Akzeptoren in der vorliegenden Erfindung umfassen zum Beispiel Moleküle, in denen einige oder alle der Strukturen (XX) Reste von (Meth)acrylsäure, Fumarsäure oder Maleinsäure, substituierte Versionen oder Kombinationen davon sind, die über eine Esterbindung an das multifunktionelle Michael-Akzeptor-Molekül angebunden sind. Eine Verbindung mit Strukturen (XX), die zwei oder mehr Reste von (Meth)acrylsäure umfassen, wird hierin als "polyfunktionelles (Meth)acrylat" bezeichnet. Polyfunktionelle (Meth)acrylate mit mindestens zwei Doppelbindungen, die als der Akzeptor in der Michael-Addition agieren können, sind bevorzugt.

Beispiele geeigneter Di(meth)acrylate umfassen, sind aber nicht darauf beschränkt: Ethylenglykol-di(meth)acrylat, Propylenglykol-di(meth)acrylat, Diethylenglykol-di(meth)acrylat, Dipropylenglykol-di(meth)acrylat, Triethylenglykol-di(meth)acrylat, Tripropylenglykol-di(meth)acrylat, Tertraethylenglykol-di(meth)acrylat, Tetrapropylenglykol-di(meth)acrylat, Polyethylenglykol-di(meth)acrylat, Polypropylenglykol-di(meth)acrylat, ethoxyliertes Bisphenol A-Di(meth)acrylat, Bisphenol A diglycidylether-di(meth)acrylat, Resorcinoldiglycidylether-di(meth)acrylat, 1,3-Propandiol-di(meth)acrylat, 1,4-Butanediol-di(meth)acrylat, 1,5-Pentandiol-di(meth)acrylat, 1,6-Hexandiol-di(meth)acrylat, Neopentylglykol-di(meth)acrylat, Cyclohexanedimethanol-di(meth)acrylat, ethoxyliertes Neopentylglykol-di(meth)acrylat, propoxyliertes Neopentylglykol-di(meth)acrylat, ethoxyliertes Cyclohexandimethanol-di(meth)acrylat, propoxyliertes Cyclohexandimethanol-di(meth)acrylat, Arylurethan-di(meth)acrylate, aliphatisches Urethan-di(meth)acrylat, Polyester-di(meth)acrylat und Gemische davon.

Beispiele geeigneter Tri(meth)acrylate umfassen, sind aber nicht darauf beschränkt: Trimethylolpropan-tri(meth)acrylat, trifunktionelles (Meth)acrylsäure-s-triazin, Glycerol-tri(meth)acrylat, ethoxyliertes Trimethylolpropan-tri(meth)acrylat, propoxyliertes Trimethylolpropan-tri(meth)acrylat, Tris(2-hydroxyethyl)isocyanurat-tri(meth)acrylat, ethoxyliertes Glycerol-tri(meth)acrylat, propoxyliertes Glycerol-tri(meth)acrylat, Pentaerythritol-tri(meth)acrylat, Arylurethan-tri(meth)acrylate, aliphatische Urethan-tri(meth)acrylate, Melamin-tri(meth)acrylate, Epoxy-Novolac-tri(meth)acrylate, aliphatisches Epoxy-tri(meth)acrylat, Polyester-tri(meth)acrylat und Gemische davon.

Beispiele geeigneter Tetra(meth)acrylate umfassen, sind aber nicht darauf beschränkt: Di(trimethylolpropan)-tetra(meth)acrylat, Pentaerythritol-tetra(meth)acrylat, ethoxyliertes Pentaerythritol-tetra(meth)acrylat, propoxyliertes Pentaerythritol-tetra(meth)acrylat, Dipentaerythritol-tetra(meth)acrylat, ethoxyliertes Dipentaerythritol-tetra(meth)acrylat, propoxyliertes Dipentaerythritol-tetra(meth)acrylat, Arylurethan-tetra(meth)acrylate, aliphatische Urethan-tetra(meth)acrylate, Melamin-tetra(meth)acrylate, Epoxy-Novolac-tetra(meth)acrylate, Polyester-tetra(meth)acrylate und Gemische davon.

Es können auch Gemische der mehrfunktionellen (Meth)acrylate untereinander verwendet werden.

Als der multifunktionelle Michael-Akzeptor auch geeignet sind polyfunktionelle (Meth)acrylate, in denen das Gerüst polymer ist. Die (Meth)acrylat-Gruppen können an das polymere Gerüst auf vielfältige Art und Weise angelagert sein. Zum Beispiel kann ein (Meth)acrylatestermonomer an eine polymerisierbare funktionelle Gruppe durch die Esterbindung angelagert sein und diese polymerisierbare funktionelle Gruppe kann mit anderen Monomeren so polymerisiert werden, dass sie die Doppelbindung der (Meth)acrylatgruppe intakt lässt.

In einem anderen Beispiel kann ein Polymer mit funktionellen Gruppen (wie zum Beispiel ein Polyester mit restlichen Hydroxyl-Gruppen) ausgestattet werden, die mit einem (Meth)acrylatester (zum Beispiel durch Umesterung) umgesetzt werden können, um so ein Polymer mit (Meth)acrylatseitengruppen zu erhalten. In einem noch anderen Beispiel kann ein Homopolymer oder Copolymer, das ein polyfunktionelles (Meth)acrylatmonomer (wie Trimethylolpropantriacrylat) umfasst, derartig erzeugt werden, dass nicht alle Acrylatgruppen reagieren.

In einer besonders bevorzugten Ausführungsform der Erfindung ist die funktionelle Michael-Akzeptor-Gruppe ein (Meth)acrylsäureester der zuvor erwähnten Polyol-Verbindungen. Alternativ können auch Michael-Akzeptoren verwendet werden, bei denen die Struktur (XX) über ein Stickstoffatom anstelle eines Sauerstoffatoms an das Polyol-Gerüst gebunden ist, wie beispielsweise (Meth)acrylamide.

Gemische aus geeigneten multifunktionellen Michael-Akzeptoren sind auch geeignet, wie die dem Fachmann bekannten Acrylamide, Nitrile, Fumarsäureester und Maleinimiden.

Je nach Funktionalität des Michael-Akzeptors und/oder des Michael-Donors können der Vernetzungsgrad des Bindemittels und somit sowohl die Festigkeit der entstehenden Beschichtung als auch deren elastische Eigenschaften eingestellt werden.

In der Zusammensetzung der vorliegenden Erfindung kann der relative Anteil an multifunktionellen Michael-Akzeptoren zu multifunktionellen Michael-Donoren durch das reaktive Äquivalentverhältnis, welches das Verhältnis der Anzahl aller funktionellen Gruppen (XX) in der Zusammensetzung zu der Anzahl an Michael-aktiven Wasserstoffatomen in der Zusammensetzung ist, charakterisiert werden. In einigen Ausführungsformen ist das reaktive Äquivalentverhältnis 0,1 bis 10:1; bevorzugt 0,2 bis 5:1; stärker bevorzugt 0,3 bis 3:1; noch stärker bevorzugt 0,5 bis 2:1; am stärksten bevorzugt 0,75 bis 1,25:1.

Obwohl die Michael-Additionsreaktion bereits ohne Katalysator abläuft und eine Härtung stattfindet, kann ein Katalysator für die Reaktion zwischen dem Michael-Akzeptor und dem Michael-Donor verwendet werden.

Als Katalysatoren können die üblicherweise für Michael-Additionsreaktionen, insbesondere zwischen elektronenarmen C-C-Mehrfachbindungen, besonders bevorzugt C-C-Doppelbindungen, und aktive Wasserstoffatome enthaltende Verbindungen, insbesondere Thiole, verwendeten Nukleophile verwendet werden, wie Trialkylphosphine, tertiäre Amine, einer Guanidinbase, einem Alkoholat, einem Tetraorganoammoniumhydroxid, einem anorganischen Carbonat oder Bicarbonat, einem Carbonsäuresalz oder einer Superbase, einem Nukleophil wie etwa einem primären oder einem sekundären Amin oder einem tertiären Phosphin (vgl. etwa C. E. Hoyle, A. B. Lowe, C. N. Bowman, Chem Soc. Rev. 2010, 39, 1355-1387), die dem Fachmann bekannt sind.

Geeignete Katalysatoren sind beispielsweise Triethylamin, Ethyl-*N*,*N*-diisopropylamin, 1,4-Diazabicyclo[2.2.2]octan (DABCO), 1,8-Diazabicyclo[5.4.0]undec-7-en (DBU), 1,5-Diazabicyclo[4.3.0]non-5-en (DBN), Dimethylaminopyridin (DMAP), Tetramethylguanidin (TMG), 1,8-Bis(dimethylamino)naphthalin, 2,6-Di-*tert*-butylpyridin, 2,6-Lutidin, Natriummethanolat, Kaliummethanolat, Natriumethanolat, Kaliumethanolat, Kalium-*tert-*butylalkoholat, Benzyltrimethylammoniumhydroxid, Kaliumcarbonat, Kaliumbicarbonat, Natrium- oder Kaliumsalze von Carbonsäuren, deren konjugierte Säurestärken zwischen pKₐ 3 und 11 liegen, *n*-Hexylamin, Di-*n*-propylamin, Tri-*n*-octylphosphin, Dimethylphenylphosphin, Methyldiphenylphosphin und Triphenylphosphin.

Der Katalysator kann in katalytischen Mengen oder äquimolar oder im Überschuss eingesetzt werden.

Durch Zugabe mindestens eines Reaktivverdünners kann die Viskosität der Zusammensetzung entsprechend den Applikationseigenschaften eingestellt bzw. angepasst werden.

In einer Ausführungsform der Erfindung enthält die Zusammensetzung daher weitere niederviskose Verbindungen als Reaktivverdünner, um die Viskosität der Zusammensetzung anzupassen, falls erforderlich. Als Reaktivverdünner können, als Reinstoff oder im Gemisch, niederviskose Verbindungen eingesetzt werden, welche mit den Komponenten der Zusammensetzung reagieren. Beispiele sind Allylether, Allylester, Vinylether, Vinylester, (Meth)acrylsäureester und Thiol-funktionalisierte Verbindungen. Reaktivverdünner werden bevorzugt aus der Gruppe ausgewählt, bestehend aus Allylether, wie Allylethylether, Allylpropylether, Allylbutylether, Allylphenylether, Allylbenzylether, Trimethylolpropanallylether, Allylester, wie Essigsäureallylester, Buttersäureallylester, Maleinsäurediallylester, Allylacetoacetat, Vinylether, wie Butylvinylether, 1,4-Butandiolvinylether, tert-Butylvinylether, 2-Ethylhexylvinylether, Cyclohexylvinylether, 1,4-Cyclohexandimethanolvinylether, Ethylenglykolvinylether, Diethylenglykolvinylether, Ethylvinylether, Isobutylvinylether, Propylvinylether, Ethyl-1-propenylether, Dodecylvinylether, Hydroxypropyl(meth)acrylat, 1,2-Ethandioldi(meth)acrylat, 1,3-Propandioldi(meth)acrylat, 1,2-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, Ethyltriglykol(meth)acrylat, *N,N-*Dimethylaminoethyl(meth)acrylat, *N*,*N*-Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, Isobornyl(meth)acrylat und Decalyl-2-(meth)acrylat.

Grundsätzlich können auch andere übliche Verbindungen mit reaktiven Doppelbindungen, allein oder im Gemisch mit den (Meth)acrylsäureestern, eingesetzt werden, z. B. Styrol, α-Methylstyrol, alkylierte Styrole, wie *tert*-Butylstyrol, Divinylbenzol und Allylverbindungen.

Die Wirkungsweise der erfindungsgemäßen ablativ wirkenden Zusammensetzung baut auf einer endothermen physikalischen und/oder chemischen Reaktion auf, wobei Stoffe, die bei deren Zersetzung große Mengen von Energie benötigen, in der Zusammensetzung enthalten sind. Wird die ausgehärtete Zusammensetzung erhöhter Temperatur, wie etwa im Brandfall der eines Feuers ausgesetzt, wird eine Reihe von chemischen und physikalischen Prozessen in Gang gesetzt. Diese Prozesse sind etwa die Freisetzung von Wasserdampf, Veränderung der chemischen Zusammensetzung und die Bildung nichtbrennbarer Gase, die den zur Verbrennung notwendigen Sauerstoff von der Kabeloberfläche fernhalten. All diese Prozesse benötigen eine große Menge Energie, die dem Feuer entzogen wird. Nachdem die Umwandlung aller organischen Bestandteile abgeschlossen ist, hat sich eine stabile Isolationsschicht aus anorganischen Bestandteilen gebildet, die eine zusätzliche isolierende Wirkung hat.

Erfindungsgemäß enthält der Bestandteil C daher mindestens ein ablativ wirkendes Brandschutzadditiv, wobei als Additive sowohl einzelne Verbindungen als auch ein Gemisch von mehreren Verbindungen verwendet werden kann.

Zweckmäßig werden als ablativ wirkende Brandschutzadditive solche Materialien eingesetzt, die durch Wasserabspaltung, das etwa in Form von Kristallwasser eingelagert ist, und Wasserverdampfung energieverzehrende Schichten bilden. Die Wärmeenergie, die zur Abspaltung des Wassers aufgewendet werden muss, wird dabei dem Brand entzogen. Ferner werden solche Materialien eingesetzt, die sich bei Hitzeeinwirkung in einer endothermen Reaktion chemisch verändern bzw. zersetzen, verdampfen, sublimieren oder schmelzen. Dadurch werden die beschichteten Substrate gekühlt. Häufig werden bei der Zersetzung inerte, d.h. nicht brennbare Gase wie etwa Kohlendioxid freigesetzt, welche zusätzlich den Sauerstoff in unmittelbarer Umgebung des beschichteten Substrates verdünnen.

Als gasabspaltende Bestandteile eignen sich Hydroxide, wie Aluminiumhydroxid und Magnesiumhydroxid sowie deren Hydrate, die Wasser abspalten, sowie Carbonate, wie Calciumcarbonat, die Kohlendioxid abspalten. Basische Carbonate können sowohl Wasser als auch CO₂ abspalten. Bevorzugt ist eine Kombination von bei verschiedenen Temperaturen mit der Gasabspaltung beginnenden Bestandteilen. So beginnt die Wasserabspaltung bei Aluminiumhydroxid bereits bei ca. 200°C, wogegen die Wasserabspaltung von Magnesiumhydroxid bei ca. 350°C einsetzt, so dass die Gasabspaltung über einen größeren Temperaturbereich hinweg erfolgt.

Geeignete ablativ wirkende Materialien sind, bei Hitzeeinwirkung wasserabgebende anorganische Hydroxide oder Hydrate, wie solche von Natrium, Kalium, Lithium, Barium, Calcium, Magnesium, Bor, Aluminium, Zink, Nickel, ferner Borsäure und deren teilentwässerte Derivate.

Beispielhaft können folgende Verbindungen genannt werden: LiNO₃-3H₂O, Na₂CO₃H₂O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AlOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OHMSO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₄(CO₃)₃(OH)₃₆ Hydrogranat, 3CaO·Al₂O₃·6H₂O Dawsonit, NaAl(OH)CO₃, wasserhaltige Zeolithe, Vermikulite, Colemanit, Perlite, Glimmer, Alkalisilikate, Borax, modifizierte Kohlen und Graphite, Kieselsäuren.

In einer bevorzugten Ausführungsform sind die hydrierten Salze ausgewählt aus der Gruppe bestehend aus Al₂(SO₄)·16-18H₂O, NH₄Fe(SO₄)₂·12H₂O, Na₂B₄O₇·10H₂O, NaAl(SO₄)₂·12H₂O, AlNH₄(SO₄)₂·12-24H₂O, Na₂SO₄·10H₂O, MgSO₄·7H₂O, (NH₄)₂SO₄·12H₂O; KAl(SO₄)₂·12H₂O, Na₂SiO₃·9H₂O, Mg(NO₂)₂·6H₂O, Na₂CO₃·7H₂O und Gemischen davon (EP1069172A).

Besonders bevorzugt sind Aluminiumhydroxid, Aluminiumhydroxidhydrate, Magnesiumhydroxid und Zinkborat, da sie eine Aktivierungstemperatur unterhalb 180°C haben.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate und Addukte. Solche Verbindungen sind beispielsweise beschrieben in S. V Levchik, E. D Weil, Polym. Int. 2004, 53, 1901-1929 oder E. D. Weil, S. V. Levchik (Hrsg.), Flame Retardants for Plastics and Textiles - Practical Applications, Hanser, 2009.

Das ablativ wirkende Brandschutzadditiv kann in einer Menge von 5 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst gute Isolation zu bewirken, wird der Anteil des Bestandteils C in der Gesamtformulierung so hoch wie möglich eingestellt. Bevorzugt beträgt der Anteil des Bestandteils C in der Gesamtformulierung 5 bis 85 Gew.-% und besonders bevorzugt 40 bis 80 Gew.-%.

Die Zusammensetzung kann neben den ablativen Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Die erfindungsgemäße Zusammensetzung kann als Zwei- oder Mehrkomponenten-System konfektioniert werden.

Wenn der Bestandteil A und der Bestandteil B ohne die Verwendung eines Beschleunigers bei Raumtemperatur nicht miteinander reagieren, können diese zusammen gelagert werden. Falls eine Reaktion bei Raumtemperatur eintritt, müssen der Bestandteil A und der Bestandteil B reaktionsinhibierend getrennt angeordnet werden. In Anwesenheit eines Beschleunigers muss dieser entweder getrennt von den Bestandteilen A und B gelagert werden, oder der Bestandteil, der den Beschleuniger enthält, muss getrennt von dem anderen Bestandteil gelagert werden. Hierdurch wird erreicht, dass die beiden Bestandteile A und B des Bindemittels erst unmittelbar vor der Anwendung miteinander gemischt werden und die Härtungsreaktion auslösen. Dies macht das System einfacher in der Handhabung.

In einer bevorzugten Ausführungsform der Erfindung ist die erfindungsgemäße Zusammensetzung als Zweikomponenten-System konfektioniert, wobei der Bestandteil A und der Bestandteil B reaktionsinhibierend getrennt angeordnet sind. Dementsprechend enthält eine erste Komponente, die Komponente I, den Bestandteil A und eine zweite Komponente, die Komponente II, den Bestandteil B. Hierdurch wird erreicht, dass die beiden Bestandteile A und B des Bindemittels erst unmittelbar vor der Anwendung miteinander gemischt werden und die Härtungsreaktion auslösen. Dies macht das System einfacher in der Handhabung.

Dabei ist der multifunktionelle Michael-Akzeptor bevorzugt in einer Menge von 2 bis 95 Gew.-% in der Komponente I enthalten.

Der multifunktionelle Michael-Donor ist bevorzugt in einer Menge von 2 bis 95 Gew.-%, besonders bevorzugt in einer Menge von 2 bis 85 Gew.-% in der Komponente II enthalten.

Der Bestandteil C kann dabei als Gesamtmischung oder in Einzelkomponenten aufgeteilt in einer Komponente oder mehreren Komponenten enthalten sein. Die Aufteilung des Bestandteils C erfolgt abhängig von der Verträglichkeit der in der Zusammensetzung enthaltenen Verbindungen, so dass weder eine Reaktion der in der Zusammensetzung enthaltenen Verbindungen miteinander bzw. eine gegenseitige Störung erfolgen kann. Dies ist von den verwendeten Verbindungen abhängig. Hierdurch wird sichergestellt, dass ein möglichst hoher Anteil an Füllstoffen erzielt werden kann. Dies führt zu einer guten Kühlung, selbst bei geringen Schichtdicken der Zusammensetzung.

Die Zusammensetzung wird als Paste mit einem Pinsel, einer Rolle oder durch Sprühen auf das Substrat, welches metallisch sein kann, Kunststoff im Fall von Kabeltrassen oder Weichschotts aus Mineralwolle aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine relativ schnelle Aushärtung durch eine Additionsreaktion und damit nicht notwendige physikalische Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, was in lösemittel- oder wasserbasierten Systemen zu einem Auswaschen von wasserlöslichen Bestandteilen führen kann, bzw. bei der Aufnahme von Staub zu einer reduzierten ablativen Wirkung. Durch die geringe Viskosität der Zusammensetzung trotz des hohen Feststoffanteils, der ohne die Zugabe leicht flüchtiger Lösemittel bis zu 99 Gew.-% in der Zusammensetzung betragen kann, bleibt die Zusammensetzung einfach zu verarbeiten, insbesondere durch gängige Sprühverfahren.

Deshalb ist die erfindungsgemäße Zusammensetzung insbesondere als Brandschutzbeschichtung, insbesondere sprühbare Beschichtung für Bauteile auf metallischer und nicht metallischer Basis geeignet. Die erfindungsgemäße Zusammensetzung findet vor allem im Baubereich als Beschichtung, insbesondere Brandschutzbeschichtung für einzelne Kabel, Kabelbündel, Kabeltrassen und Kabelkanäle oder andere Leitungen Verwendung sowie als Brandschutzbeschichtung für Stahlkonstruktionselemente, aber auch für Konstruktionselemente aus anderen Materialien, wie Beton oder Holz.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung für einzelne Kabel, Kabelbündel, Kabeltrassen und Kabelkanäle oder andere Leitungen oder Weichschotts.

Die vorliegende Erfindung betrifft auch Objekte, die erhalten werden, wenn die erfindungsgemäße Zusammensetzung ausgehärtet ist. Die Objekte haben ausgezeichnete ablative Eigenschaften.

Die folgenden Beispiele dienen der weiteren Erläuterung der Erfindung.

### AUSFÜHRUNGSBEISPIELE

Für die Herstellung von erfindungsgemäßen ablativ wirkenden Zusammensetzungen verwendet man die nachfolgend aufgelisteten Bestandteile. Es werden jeweils die Einzelkomponenten mit Hilfe eines Dissolvers vermengt und homogenisiert. Für die Anwendung werden diese Mischungen dann entweder vor dem Versprühen oder während des Versprühens vermischt und appliziert.

Zur Bestimmung der Brandschutzeigenschaften wurde die ausgehärtete Zusammensetzung einer Prüfung nach EN ISO 11925-2 unterzogen. Die Prüfung erfolgt in einem zugfrei aufgestellten Brennkasten Mitsubishi FR-D700SC Electric Inverter. Bei der Prüfung wird im Winkel von 45° eine Kleinbrennerflamme für 30 s auf die Probenoberfläche gerichtet, dies entspricht einer Flächenbeflammung.

Es werden jeweils Proben mit den Abmessungen 11 cm x 29,5 cm und einer Anwendungsdicke von 2-3 mm verwendet. Diese Proben härteten bei Raumtemperatur aus und wurden drei Tage bei 40°C gealtert.

Nach der Alterung von drei Tagen bei 40°C erfolgt die Überprüfung von Entzündlichkeit und Höhe der angegriffenen Fläche.

Die Aushärtungszeit und der Aushärtungsverlauf wurden bestimmt. Dabei wurde mit einem Spatel getestet, wann die Aushärtung der Beschichtung startet.

Für die folgenden Beispiele 1 und 2 wurde als Bestandteil C Aluminiumtrihydrat (HN 434 der J.M. Huber Corporation, Finnland) verwendet und in einer Menge von 18,0 g eingesetzt:

### Beispiel 1

### Bestandteil A

| **Bestandteil** | **Menge [g]** |
|---|---|
| Glycoldi (3-mercaptopropionat) | 32,8 |
| Durcal 5¹) | 36,0 |

| | |
|---|---|
| Calciumcarbonat, gemahlen | |

### Bestandteil B

| **Bestandteil** | **Menge [g]** |
|---|---|
| 1,1,1-Tris(hydroxymethyl)propantriacrylat | 27,2 |
| Durcal 5 | 36,0 |

### Beispiel 2

### Bestandteil A

| **Bestandteil** | **Menge [g]** |
|---|---|
| Glycoldi(3-mercaptopropionat) | 32,7 |
| Durcal 5 | 36,0 |

### Bestandteil B

| **Bestandteil** | **Menge [g]** |
|---|---|
| Pentaerythrittriacrylat | 27,3 |
| Durcal 5 | 36,0 |

### Vergleichsbeispiel 1

Als Vergleich diente ein auf wässriger Dispersionstechnologie (Acrylatdispersion) basiertes kommerzielles Brandschutzprodukt (Hilti CFP SP-WB).

**Tabelle 1: Ergebnisse der Bestimmung der Aushärtungszeit, der Entzündung und der Flammenhöhe**

| | **Vergleichsbeispiel 1** | **Beispiel 1** | **Beispiel 2** |
|---|---|---|---|
| Aushärtungszeit | 24 h | < 1 h | < 1 h |
| Entzündung | ja | nein | nein |
| Flammenhöhe | 150 mm | 32 mm | 26 mm |

## Patentansprüche

1. Brandschutz-Zusammensetzung mit einem Bestandteil A, der einen multifunktionellen Michael-Akzeptor enthält, der mindestens zwei elektronenarme Kohlenstoffmehrfachbindungen pro Molekül als funktionelle Michael-Akzeptor-Gruppe aufweist, mit einem Bestandteil B, der einen multifunktionellen Michael-Donor enthält, der mindestens zwei Thiol-Gruppen pro Molekül als funktionelle Michael-Donor-Gruppe aufweist, und mit einem Bestandteil C, der mindestens ein ablativ wirkendes Brandschutzadditiv enthält.

2. Zusammensetzung nach Anspruch 1, wobei die die funktionelle Michael-Akzeptor-Gruppe die Struktur (XX) aufweist: 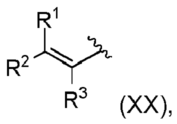 in der
R₁, R₂ und R₃ jeweils unabhängig voneinander Wasserstoff, eine lineare, verzweigte oder cyclische, gegebenenfalls substituierte Alkylgruppe, Arylgruppe, Aralkylgruppe oder Alkylarylgruppe darstellt, wobei diese unabhängig voneinander zusätzliche Ethergruppen, Carboxylgruppen, Carbonylgruppen, Thiol-analoge Gruppen, Stickstoff enthaltende Gruppen oder Kombinationen davon enthalten können.

3. Zusammensetzung nach Anspruch 2, wobei jede funktionelle Michael-Akzeptor-Gruppe entweder direkt oder über einen Linker an ein Gerüst direkt angelagert ist.

4. Zusammensetzung nach Anspruch 3, wobei das Gerüst ein Monomer, ein Oligomer oder ein Polymer ist.

5. Zusammensetzung nach Anspruch 4, wobei das Gerüst eine Polyolverbindung ist, die aus der Gruppe ausgewählt ist, bestehend aus Alkandiolen, Alkylenglykolen, Glycerin, 2-(Hydroxymethyl)propan-1,3-diol, 1,1,1-Tris(hydroxymethyl)ethan, 1,1,1-Trimethylolpropan, Di(trimethylolpropan), Tricyclodecandimethylol, 2,2,4-Trimethyl-1,3-pentandiol, Bisphenol A, Cyclohexandimethanol, alkoxylierte und/oder ethoxylierte und/oder propoxylierte Derivate von Neopentylglykol, Tertraethylenglykolcyclohexandimethanol, Hexandiol, 2-(Hydroxymethyl)propan-1,3-diol, 1,1,1-Tris(hydroxymethyl)ethan, 1,1,1-Trimethylolpropan und Rizinusöl, Pentaerythritol, Zucker, mehrwertige Derivate davon oder Gemische davon.

6. Zusammensetzung nach einem der vorhergehenden Ansprüche, wobei der multifunktionelle Michael-Donor mindestens drei Thiol-Gruppen pro Molekül aufweist.

7. Zusammensetzung nach einem der vorhergehenden Ansprüche, wobei der multifunktionelle Michael-Donor aus der Gruppe ausgewählt ist, bestehend aus Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1-Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), 2-Ethylhexylthioglykolat, *iso*-Octylthioglykolat, Di(*n-*butyl)thiodiglykolat, Glykol-di-3-mercaptopropionat, 1,6-Hexandithiol, Ethylenglykol-bis(2-mercaptoacetat) und Tetra(ethylenglykol)dithiol.

8. Zusammensetzung nach einem der vorhergehenden Ansprüche, wobei das reaktive Äquivalentverhältnis im Bereich von 0,1:1 bis 10:1 liegt.

9. Zusammensetzung nach einem der vorhergehenden Ansprüche, wobei der Bestandteil A und/oder der Bestandteil B ferner einen Katalysator für die Michael-Additionsreaktion enthält.

10. Zusammensetzung nach einem der vorhergehenden Ansprüche, wobei das wenigstens eine ablativ wirkende Brandschutzadditiv aus der Gruppe ausgewählt ist, bestehend aus LiNO₃·3H₂O, Na2CO3H2O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO3)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄₀·7H₂O (EP1069172A), Mg(OH)₂, Al(OH)₃, Al(OH)₃·3H₂O, AlOOH (Böhmit), Al₂[SO₄]₃·H₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO.Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OHMSO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)4₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3CaO.Al₂O₃·6H₂O Dawsonit, NaAl(OH)CO₃, wasserhaltige Zeolithe, Vermikulite, Colemanit, Perlite, Glimmer, Alkalisilikate, Borax, modifizierten Kohlen, Graphiten, Kieselsäuren und Gemischen davon.

11. Zusammensetzung nach einem der vorhergehenden Ansprüche, wobei die Zusammensetzung ferner organische und/oder anorganische Zuschlagstoffe und/oder weitere Additive enthält.

12. Zusammensetzung nach einem der vorhergehenden Ansprüche, die als Zwei- oder Mehrkomponenten-System konfektioniert ist.

13. Verwendung der Zusammensetzung nach einem der Ansprüche 1 bis 12 als Beschichtung.

14. Verwendung nach Anspruch 13 für die Beschichtung von Konstruktionselementen.

15. Verwendung nach Anspruch 13 für die Beschichtung von nicht metallischen Bauteilen.

16. Verwendung nach einem der Ansprüche 13 bis 15 als Brandschutzschicht, insbesondere für einzelne Kabel, Kabelbündel, Kabeltrassen und Kabelkanäle oder andere Leitungen oder Weichschotts.

17. Gehärtete Objekte, erhalten durch Härten der Zusammensetzung nach einem der Ansprüche 1 bis 12.
